Europäisches Patentamt

European Patent Office

Office européen des brevets

(11) Numéro de publication: **0 493 227 B1**

(12) **FASCICULE DE BREVET EUROPEEN**

(45) Date de publication de fascicule du brevet: **15.03.95** (51) Int. Cl.⁶: **B64G 1/24**, G05D 1/08

(21) Numéro de dépôt: **91403496.2**

(22) Date de dépôt: **20.12.91**

(54) **Système de contrôle d'attitude pour satellite stabilisé 3-axes sur orbite à faible inclinaison.**

(30) Priorité: **21.12.90 FR 9016149**

(43) Date de publication de la demande:
**01.07.92 Bulletin  92/27**

(45) Mention de la délivrance du brevet:
**15.03.95 Bulletin  95/11**

(84) Etats contractants désignés:
**DE ES GB IT NL SE**

(56) Documents cités:
**FR-A- 2 525 359
US-A- 4 010 921
US-A- 4 071 211
US-A- 4 521 855**

(73) Titulaire: **AEROSPATIALE Société Nationale
Industrielle
37, Boulevard de Montmorency
F-75781 Paris Cédex 16 (FR)**

(72) Inventeur: **Achkar, Issam Maurice
10, rue du Bosquet
F-06150 Cannes-la-Bocca (FR)**
Inventeur: **Guillermin, Pierre
19, Chemin de l'Aneta
F-06200 Nice (FR)**

(74) Mandataire: **Rinuy, Santarelli
14, avenue de la Grande Armée
F-75017 Paris (FR)**

Rank Xerox (UK) Business Services
(3. 10/3.0 9/3.3.3)

EP 0 493 227 B1

# Description

L'invention concerne le contrôle actif du mouvement en roulis et lacet d'un satellite à moment cinétique embarqué, placé sur une orbite équatoriale ou de faible inclinaison sur l'Equateur (inférieure à 10 degrés) et stabilisé selon trois axes.

On connaît déjà divers exemples de contrôle d'attitude de satellite stabilisé 3-axes et comportant un moment cinétique embarqué, c'est-à-dire comportant une ou plusieurs roue(s) cinétique(s) dont le moment cinétique global reste en permanence non nul, générant ainsi un effet gyroscopique de stabilisation.

Ainsi par exemple, le document FR-2.522.614 (CENTRE NATIONAL D'ETUDES SPATIALES - invention de MOUILHAYRAT et al.) concerne un satellite comportant une plateforme stabilisée en regard du Soleil et une charge utile, montée rotative autour d'un axe NORD-SUD par rapport à cette plate-forme en sorte de rester stabilisée en regard de la Terre. Pour la génération de couples de correction d'attitude, la plate-forme contient des actionneurs constitués d'une roue cinétique d'axe perpendiculaire à l'axe NORD-SUD et d'une roue à réaction ; leurs vitesses de rotation sont commandées à partir des informations d'attitude de la plate-forme relevées par des détecteurs solaire et stellaire. La charge utile est commandée en rotation par rapport à la plate-forme à partir de la mesure d'un détecteur terrestre (ce dernier ne coopère donc pas avec les autres détecteurs, solaire et stellaire).

Le document FR-2.637.565 (AEROSPATIALE-invention de MAUTE) décrit, dans le cas de satellites géostationnaires, un système de contrôle d'attitude utilisant les signaux provenant de détecteurs terrestre, solaire et stellaire pour la commande d'actionneurs pouvant être des roues de réaction, des roues d'inertie ou des tuyères. Plusieurs lignes de traitement sont prévues en parallèle, correspondant à divers modes de fonctionnement.

Le document FR-2.319.150 (RCA CORPORATION-invention de MUHLFELDER et SCHMIDT) concerne un satellite en orbite synchrone et à moment cinétique fixe orienté selon l'axe de tangage, dans lequel on veut se dispenser de toute mesure de l'attitude en lacet. Seule l'attitude en roulis est mesurée (par un capteur d'horizon) et la correction d'attitude se fait lorsque l'écart d'attitude en roulis dépasse un seuil (déclenchement en tout ou rien) à l'aide d'une bobine magnétique disposée dans le plan roulis-lacet, propre à interagir avec le champ magnétique terrestre.

Le document FR-2.498.155 (RCA CORPORATION-invention de MUHLFELDER, PHILIPS et BALSNIK) décrit un perfectionnement au document précédent faisant intervenir un retard dans la génération du couple de correction d'origine magnétique, déterminé à partir de la période de nutation du satellite.

Le document US-4.294.420 (MATRA - invention de BROQUET) décrit un satellite ayant deux roues d'inertie disposées en V dans un plan contenant l'axe de tangage, lesquelles sont commandées en rotation à partir de mesures d'attitude en roulis et en tangage fournies par des détecteurs terrestres. Le moment cinétique est ainsi orientable selon un degré de liberté. La stabilisation de l'attitude en lacet est effectuée à court terme de façon passive, par effet gyroscopique, avec éventuelle mise en oeuvre complémentaire de tuyères ou de bobines magnétiques pour les corrections à long terme.

Le document US-4.521.855 (FORD AEROSPACE-invention de LEHNER et LEBSOCK) concerne le contrôle en roulis/lacet d'un satellite ne faisant expréssément pas intervenir de détecteur stellaire, et mettant en oeuvre un moment cinétique orientable dans le plan tangage/lacet. Seule l'attitude en roulis est mesurée ; une boucle rapide en roulis détermine des variations de vitesse des roues tandis qu'une boucle lente en lacet (du type à observateur de LUENBERGER) commande une bobine magnétique unique disposée sur l'axe de lacet.

L'article paru dans : "Proceedings of AOCS conference, held in Noordwijk, the Netherlands, 3-6 October 1977, ESA SP-128 November 1977, pp. 103-110 (LACOMBE J.L.) "Magnetotorquing for the attitude control of geostationnary satellites" présente une méthode de conception d'un système de contrôle magnétique du roulis/lacet pour satellite géosynchrone stabilisé 3-axes par deux roues en V et propose de générer le dipôle magnétique à bord selon une loi qui s'inspire du contrôle type WHECON classiquement utilisé avec les tuyères. Pour ce faire, l'axe de la bobine est décalé par rapport à l'axe de lacet d'un angle $\alpha$ proche de 45 degrés alors que le module du dipôle magnétique généré est défini en fonction de l'angle de roulis mesuré par un détecteur terrestre.

L'article paru dans : Journal of Guidance and control, Vol. 2 ; n° 4 - July August 79, pp. 334-338 (GOEL P.L. and RAJARAM S.) "Magnetic attitude control of a momentum-biased satellite in Near-Equatorial orbit", présente un système de contrôle magnétique en boucle fermée pour le mouvement en roulis/lacet d'un satellite 3-axes à moment cinétique fixe. L'erreur en roulis, mesurée par un détecteur terrestre, est filtrée en deux composantes : une composante à la pulsation orbitale et une autre à la pulsation de nutation. Ensuite, on alimente une bobine magnétique disposée sur l'axe de roulis de sorte que son dipôle magnétique soit défini linéairement en fonction de ces deux composantes de manière à assurer simultanément le contrôle à court et long termes de l'attitude.

L'article paru dans : Acta Astronautica, Vol 9, n° 12, 1982, pp. 697-702 "Advanced reaction wheel controller for attitude control of spacecraft" (TSUCHIYA K., INOUE M., WAKASUQI N. and YAMAGUCHI T.), présente une loi originale pour le contrôle du roulis/lacet à court terme dans le cas d'un satellite muni d'une roue cinétique en tangage et d'une roue de réaction en lacet. Dans cette référence, la loi de commande de la roue de réaction applique la technique moderne de contrôle par retour d'état sur l'angle de roulis mesuré par le détecteur de Terre et sur les vitesses angulaires de roulis et de lacet estimées à l'aide d'un observateur de Luenberger d'ordre minimal et égal à 2. Les seules mesures d'attitude sont effectuées par un détecteur terrestre.

Enfin, HUBERT et BRUNO - "Nutation damping using a pivotable momentum Wheel" (article paru dans : Journal of Guidance, control and dynamics, Vol. 12, n° 5, Sept-Oct. 89, pp. 756-757) présente un système d'amortissement de la nutation de l'axe de tangage (ou bien de contrôle en roulis/lacet à court terme) pour un satellite à moment cinétique orientable grâce à une roue cinétique sur pivot. Le pivot d'axe parallèle à l'axe de roulis est actionné par un moteur pas à pas commandé par une logique non linéaire détectant le changement de signe de la vitesse angulaire en roulis. Cette dernière est, soit mesurée à l'aide d'un gyromètre, soit calculée en dérivant par rapport au temps l'angle de roulis mesuré par un détecteur de Terre. Ensuite, le signal obtenu est filtré par un filtre passe-bande centré autour de la pulsation de nutation du satellite.

L'invention a pour objet un meilleur niveau de performances que les solutions précitées, durables dans le temps, sans pénalité excessive en coût ou en masse.

L'invention vise ainsi une commande en contrôle d'attitude pour satellite stabilisé 3-axes à moment cinétique embarqué, et sur orbite équatoriale ou faiblement inclinée, qui soit de très grande précision aussi bien en lacet qu'en roulis, pouvant par exemple atteindre 0.02 degré, ayant une masse modérée, tout en restant simple et d'un coût raisonnable, et ne nécessitant pas de consommation notable d'énergie (notamment sous forme d'ergols), de manière à permettre de satisfaire notamment aux exigences de pointage des futurs satellites de télécommunications optiques ou de télévision directe de seconde génération.

Elle propose à cet effet un système de contrôle d'attitude en roulis/lacet d'un satellite stabilisé 3-axes sur une orbite équatoriale ou faiblement inclinée sur l'Equateur, comportant :

- un dispositif de détection de l'attitude du satellite en roulis, en lacet et en tangage, comportant un détecteur terrestre et un détecteur stellaire adapté à détecter l'Etoile Polaire ;
- un dispositif d'actionnement à plusieurs éléments comportant un ensemble à moment cinétique en permanence non nul et à composante dominante orientée selon l'axe de tangage et un ensemble générateur de dipôle magnétique disposé au moins approximativement parallèlement au plan roulis/lacet, et un jeu d'actionneurs de secours ;
- un circuit de traitement connecté entre le dispositif de détection d'attitude et le dispositif d'actionnement et comportant :
  . une boucle de contrôle en roulis/lacet à court terme comportant un estimateur d'état pour estimer, à partir des mesures du dispositif de détection les valeurs angulaires et les vitesses angulaires d'attitude en roulis et en lacet, et un régulateur à gains présélectionnés pour déterminer, à partir des valeurs et vitesses angulaires estimées, des signaux de consigne destinés, au travers d'une logique de distribution, à certains au moins des éléments du dispositifs d'actionnement,
  . une boucle de contrôle en roulis/lacet à long terme comportant un estimateur d'état pour estimer, à partir des mesures du dispositif de détection, les valeurs angulaires d'attitude en roulis et en lacet, et les composantes selon les axes de roulis et de lacet des couples de perturbation externes et un régulateur pour déterminer, au travers d'une logique de distribution, un signal de dipôle à appliquer à l'ensemble générateur de dipôle magnétique, ainsi que, en parallèle sur le régulateur, une chaîne de secours adaptée à envoyer des signaux de commande au jeu d'actionneurs de secours.

Selon des dispositions préférées de l'invention :

- l'ensemble à moment cinétique du dispositif d'actionnement est à moment cinétique fixe,
- les signaux de consigne délivrés par le régulateur de la boucle de contrôle à court terme sont appliqués aux bobines magnétiques et le dipôle déterminé par le régulateur de la boucle de contrôle à long terme est ajouté à ces signaux de consigne,
- l'ensemble à moment cinétique du dispositif d'actionnement est à moment cinétique orientable à un degré de liberté autour d'un axe au moins approximativement parallèle à l'axe de roulis,
- l'ensemble à moment cinétique orientable comporte des tachymètres fournissant des signaux de vitesse destinés à la boucle de contrôle à long terme.

Le satellite visé par l'invention dispose ainsi d'un moment cinétique qui reste en permanence non nul et dont la composante dominante est orientée selon l'axe de tangage. Ce moment cinétique non nul peut être fixe (cas 1), ou orientable (cas 2) avec un degré de liberté autour d'un axe proche de l'axe de roulis.

La génération d'un moment cinétique fixe peut se faire, par exemple, à l'aide d'une roue cinétique dont l'axe de rotation est proche de l'axe de tangage.

La génération d'un moment cinétique orientable peut être obtenue, par exemple, grâce à une roue cinétique en tangage et une roue de réaction en lacet, ou bien avec deux roues en V autour de l'axe de tangage et une roue de réaction dans le plan roulis/lacet (par exemple sur l'axe de lacet), ou bien au moyen d'une seule roue cinétique montée sur un pivot sensiblement transversal au plan tangage-lacet (le pivot est alors avantageusement muni d'un actionneur (par exemple un moteur électrique pas à pas et d'un capteur de position).

Le satellite est de préférence équipé de deux magnétocoupleurs sous forme de bobines magnétiques dont les axes sont de préférence orthogonaux et proches ou inclus dans le plan roulis/lacet, et comporte en outre d'autres actionneurs, par exemple des tuyères, capables de générer des couples notamment autour des axes de roulis et de lacet.

La mesure des erreurs d'attitude en roulis et en tangage est effectuée par un détecteur terrestre, par exemple à infrarouge, alors que la détermination du lacet est faite à l'aide d'un détecteur stellaire ayant un champ de vue de l'ordre de deux fois la valeur (inclinaison orbitale + 3 degrés) et une sensibilité opto-électronique telle qu'il puisse détecter en permanence l'étoile Polaire (elle se trouve à environ 1 degré du pôle Nord géographique).

On appréciera que, dans le mode normal de fonctionnement du satellite (qui, on l'a vu, peut être par exemple de télécommunications ou d'observation ou à caractère scientifique), le système de contrôle d'attitude assure le pointage de la charge utile (antennes, instrument optique, radar, etc...) en maintenant non seulement les angles de roulis et lacet mais en outre leurs dérivées à l'intérieur de plages éventuellement variables qui leur sont assignées.

Pour ce faire, des logiques de contrôle appropriées exploitent simultanément les mesures angulaires des détecteurs terrestre et stellaire, et, s'il y a lieu, les mesures de vitesse de rotation des roues effectuées par des tachymètres associés, dans le but de définir aussi bien les moments cinétiques (ou les couples) de consigne pour ces roues que les dipôles (ou les intensités de courant) à commander aux bobines magnétiques ou, le cas échéant, les commandes aux autres actionneurs.

Le système de l'invention pour la correction automatique des erreurs en roulis et en lacet agit ainsi à court et long termes.

La commande du mouvement en tangage ne fait pas partie de cette invention et peut être de tout type connu approprié, par exemple faite à l'aide de la (ou les) roue(s) cinétique(s) et des actionneurs de désaturation tels que les tuyères principalement destinées au contrôle d'orbite EST-OUEST.

Deux boucles de contrôle sont typiquement utilisées :

- une boucle rapide dont le but est de réduire les vitesses angulaires en roulis et en lacet et, de manière générale assurer le contrôle à court terme du roulis/lacet. Dans le cas du satellite à moment cinétique fixe, la commande est réalisée par les bobines alors que dans le cas du satellite à moment cinétique variable les actionneurs sont les roues d'inertie/réaction ;
- une boucle lente destinée à compenser les effets sur l'attitude du satellite des couples perturbateurs externes, ce qui correspond au contrôle à long terme, et ce en faisant varier les dipôles générés par les bobines magnétiques ou bien en commandant les autres actionneurs.

En pratique, les logiques définissant ces boucles sont implantées à bord du satellite à l'aide, par exemple d'un calculateur utilisant entre autres, des gains et des facteurs d'échelle constants ou variables programmés dans un bloc-mémoire associé. Une autre utilisation possible est de traiter les mesures des détecteurs et de commander les actionneurs depuis le sol.

Par rapport aux documents FR-2.522.614 et FR-2.637.565, l'invention a comme avantage d'optimiser la mise en oeuvre des roues (cinétiques et/ou de réaction), en combinaison avec des bobines magnétiques, pour le contrôle du roulis/lacet à court et long termes avec l'aide des détecteurs de Terre et de Polaire.

Par rapport aux documents FR-2.319.150 et FR-2.498.155 concernant le cas d'un moment cinétique fixe, la présente invention propose d'amortir la nutation en commandant les bobines non pas en fonction de l'angle de roulis filtré et comparé à un ou plusieurs seuils, mais de façon linéaire en fonction des angles de roulis et lacet mesurée par les détecteurs de Terre et de Polaire et aussi en fonction des vitesses angulaires de roulis et de lacet estimées à l'aide d'un observateur d'état. Cela permet d'améliorer nettement les performances de la commande, notamment en ce qui concerne la rapidité de réduction des vitesses et de recalage des angles, et la minimisation des erreurs résiduelles.

Par rapport au document US-4.521.855 (moment cinétique orientable), la présente invention a notamment comme avantage de permettre que, grâce à la boucle lente basée sur la mesure conjointe du roulis et du lacet à l'aide des détecteurs de Terre et de Polaire, les performances de pointage du satellite soient équivalentes en roulis et en lacet, soit typiquement mieux que 0,02 degré pour chaque axe (en cas de champ magnétique calme) au lieu de 0.02 degré en roulis et seulement 0.1 degré en lacet pour le système de ce brevet US-4.521.855. Les performances obtenues grâce à la présente invention sont donc particulièrement bien adaptées aux contraintes de pointage fin des satellites modernes de télécommunications optiques par faisceau laser ou de télévision directe de seconde génération et même pour des satellites d'observation (par exemple météorologie) stabilisés 3-axes avec moment cinétique embarqué fixe ou orientable.

Par ailleurs, la présente invention propose, vis à vis de ce document US-4.521.855, une méthode totalement différente et plus performante pour la boucle rapide de contrôle du roulis/lacet et prévoît, en outre, une commande par d'autres actionneurs, tels que les tuyères, basée sur une logique simplifiée et dont l'objet est de venir au secours des bobines en cas de panne ou de perturbation sévère du champ magnétique (comme cela se passe notamment pendant les périodes d'éruption solaire).

Par rapport au document US-4.294.420 (moment cinétique orientable), la présente invention se distingue, d'une part par la détection du lacet à l'aide du détecteur de Polaire et, d'autre part par l'estimation des vitesses angulaires en roulis et lacet, ce qui apporte une nette amélioration aux performances de pointage autour de la direction géocentrique aussi bien à court terme qu'à moyen terme.

La présente invention, dans le cas d'un moment cinétique orientable, se distingue de l'article de LACOMBE par l'utilisation de deux bobines avantageusement orthogonales pouvant générer un dipôle dans n'importe quelle direction dans le plan roulis/lacet (et non seulement à 45 degrés) et par le calcul des dipôles des bobines non seulement en fonction du roulis mais également en fonction du lacet mesuré par le détecteur de Polaire et des composantes des perturbations externes estimées en temps réel à bord par la logique de commande. Cela a permis d'améliorer les performances en lacet : depuis typiquement 0,15 degré à 0,02 degré.

La présente invention propose, comme la référence de GOEL & RAJARAM ci-dessus, et dans le cas d'un satellite à moment cinétique fixe en tangage, une commande magnétique pour le contrôle à court et long termes du roulis/lacet. Toutefois, le filtrage de l'angle de roulis est remplacé, pour le contrôle à court terme, par un retour d'état sur les estimations des angles et des vitesses angulaires de roulis et lacet, et pour le contrôle à long terme par un retour d'état sur les estimations des angles d'attitude et des perturbations externes et ce à partir des mesures effectuées par les détecteurs de Terre et de Polaire. De ce fait, les performances de l'amortissement de nutation et de la compensation des effets des couples perturbateurs se trouvent alors nettement améliorés, puisqu'elles sont typiquement de 0.02 degré au lieu de 0.15 degré.

La boucle rapide de la présente invention dans le cas d'un moment cinétique orientable utilise, comme dans l'article de TSUCHIYA et al. le contrôle par retour d'état et l'estimation des vitesses angulaires en roulis et lacet mais l'estimateur utilisé est d'ordre complet et égal à 4, qui traite les mesures de roulis et de lacet réalisées par les détecteurs de Terre et de Polaire. Il peut s'agir d'un observateur non-minimal de LUENBERGER ("The synthesis of regulator logic using state-variable concepts" - article paru dans : "Proceedings of the IEEE, Vol. 58, n° 11, November 1970, pp. 1803-1811) ou un filtre de KALMAN à gains asymptotiques : WERTZ ("Spacecraft attitude determination and control" - Reidel Publisqhing Company, The Netherlands, 1977). Cela permet à la fois de filtrer le bruit de mesure des détecteurs et d'améliorer les performances de la commande.

En outre, la présente invention prévoît divers cas de moment cinétique orientable, y compris le cas où la variation du moment cinétique en lacet est réalisée soit par l'ensemble (1 roue cinétique + 1 roue de réaction), soit par 2 roues en V + 1 roue de réaction, soit par une roue cinétique sur pivot.

Par rapport à US-4.521.855 où la commande classique de type TERASAKI (R.M. "Dual reaction wheel control for spacecraft pointing" - article paru dans : Proceedingss oof the symposium of attitude stabilisation and control of dual spin spacecraft, AEROSPACE Corporation, El Segundo, Calif., Aug. 1967), est appliquée pour le contrôle du roulis/lacet à court terme, et grâce à l'estimation et au retour d'état sur les vitesses angulaires en roulis et en lacet, la boucle rapide de la présente invention (cas d'un moment cinétique orientable) permet d'avoir un recalage plus rapide de ces vitesses vers zéro et donc d'assurer un meilleur amortissement de la nutation de l'axe de tangage du satellite.

Enfin, par rapport à l'article de HUBERT et BRUNO ("Nutation damping using a pivotable momentum wheel" - article paru dans : Journal of Guidance, Control and Dynamics, Vol. 12, n° 5, Sept-Oct.89, pp. 756-757) la présente invention, dans le cas du satellite avec roue cinétique sur pivot, emploie une commande quasi-linéaire en fonction des angles de roulis et de lacet mesurés par les détecteurs de Terre et de Polaire et également des vitesses angulaires de roulis et lacet estimées par un observateur d'état. Cela permet à la fois de filtrer le bruit de mesure des détecteurs et d'avoir des performances comparables, sinon meilleures, pour le temps d'amortissement de la nutation et les erreurs résiduelles de pointage et de stabilisation du roulis/lacet à court terme.

En conclusion, on peut dire que la présente invention à pour originalité de proposer, dans le cas de satellites stabilisés 3-axes en orbite faiblement inclinée, un système de contrôle du roulis/lacet à court et long termes avec un détecteur de Polaire associé à un détecteur de Terre associés soit à deux bobines magnétiques dans le cas des satellites à moment cinétique fixe, ou soit des roues cinétiques et/ou de réaction et 2 bobines dans le cas du satellite 3-axes a moment cinétique orientable.

Des objets, caractéristiques et avantages de l'invention ressortent de la description qui suit, donnée à titre d'exemple non limitatif, en regard des dessins annexés sur lesquels :

- la figure 1 est un schéma rappelant les notions de repère inertiel (Xi, Yi, Zi) et de repère orbital local (Xo, Yo, Zo) ;
- la figure 2 est un schéma rappelant les notions de roulis, tangage et lacet ;
- la figure 3 est une vue schématique d'un système de contrôle d'attitude selon l'invention embarqué sur un satellite (dans le cas d'un moment cinétique fixe) ;
- la figure 4 est une vue schématique analogue dans le cas d'un moment cinétique orientable obtenu grâce à une roue cinétique en tangage et une roue à réaction en lacet ;
- la figure 5 est une vue schématique analogue dans le cas d'un moment cinétique orientable obtenu grâce à deux roues cinétiques en V et une roue de réaction ;
- la figure 6 est une vue schématique analogue dans le cas d'un moment cinétique orientable obtenu grâce à une roue cinétique sur pivot ;
- les figures 7 à 10 sont des diagrammes fonctionnels généraux du contrôle d'attitude en roulis/lacet des satellites des figures 3 à 6, respectivement ;
- la figure 11 est un schéma rappelant le principe de mesure d'un détecteur d'horizon terrestre ;
- la figure 12 est un schéma rappelant le principe de mesure d'un détecteur stellaire pointé sur l'Etoile Polaire ;
- les figures 13 à 16 sont des schémas fonctionnels des boucles de contrôle en roulis/lacet à court terme des figures 7 à 10 respectivement ; et
- les figures 17 à 20 sont des schémas fonctionnels précisant les boucles de contrôle en roulis/lacet à long terme des diagrammes des figures 7 à 10.

Il est tout d'abord rappelé que pour tout satellite en orbite autour de la Terre, on définit un trièdre orthonormé direct Xi Yi Zi dont les axes sont fixes par rapport à l'Espace inertiel avec, par exemple, Xi dirigé vers le point vernal $\gamma$, Zi vers le Nord géographique et Yi complétant le trièdre.

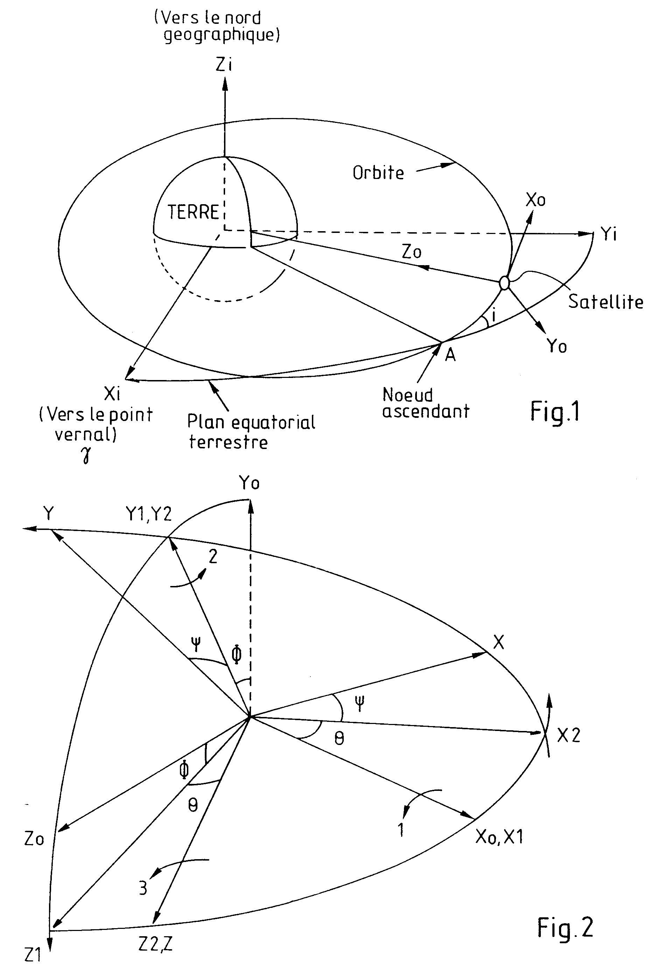

On définit par ailleurs au centre de gravité du satellite un repère Xo Yo Zo couramment appelé trièdre orbital local et dans lequel Zo est dirigé vers le centre de la Terre, Yo est parallèle à la normale orbitale négative et Xo complétant le trièdre est dirigé du même côté que le vecteur vitesse linéaire sur l'orbite. La figure 1 montre la géométrie des repères (Xi Yi Zi) et (Xo Yo Zo) dans le cas d'un satellite en orbite terrestre de faible inclinaison sur l'Equateur, typiquement inférieure ou égale à 10 degrés.

La stabilisation du satellite suivant trois axes (on parle aussi de "satellite stabilisé 3-axes") consiste à maintenir un repère X Y Z lié au satellite au plus proche voisinage du repère de référence Xo Yo Zo. Trois angles phi $\Phi$, theta $\Theta$ et psi $\Psi$ permettent de définir à chaque instant la position du repère-satellite X Y Z par rapport au repère Xo Yo Zo et ce, par exemple, comme l'indique la figure 2.

Les dénominations et convention classiques sont les suivantes :
- $\Phi$ est appelé angle de roulis et correspond à l'erreur de pointage autour de l'axe de référence Xo ;
- $\Theta$ est appelé angle de tangage et définit l'erreur de pointage autour de l'axe de référence Yo ;
- $\Psi$ est appelé angle de lacet et correspond à l'erreur d'attitude autour de l'axe de référence Zo ;
- X est appelé axe de roulis ;
- Y est appelé axe de tangage ;
- Z est appelé axe de lacet.

Le satellite auquel s'applique la présente invention est du type stabilisé 3-axes avec un moment cinétique embarqué qui reste en permanence non nul autour de l'axe de tangage ; on sait démontrer que dans ce cas le mouvement autour de l'axe de tangage est découplé des mouvements en roulis et en lacet lesquels sont couplés entre eux.

Dans la suite, on considère exclusivement le contrôle du mouvement autour des axes de roulis et de lacet aussi bien à court terme qu'à long terme, et l'on envisage aussi bien le cas d'un moment cinétique fixe en tangage (cas 1) que celui d'un moment cinétique en tangage orientable autour d'un axe proche ou inclus dans le plan de roulis/lacet du satellite (cas 2).

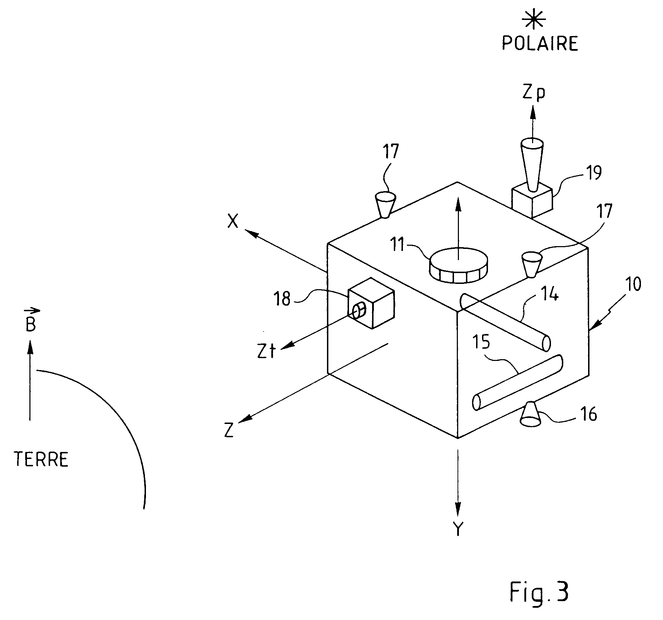

La figure 3 représente un satellite 10 représentatif du cas d'un moment cinétique fixe ; sa structure générale est classique et ne sera pas détaillée ici ; il est équipé, dans l'exemple considéré, d'une roue cinétique 11 en rotation autour de l'axe de tangage.

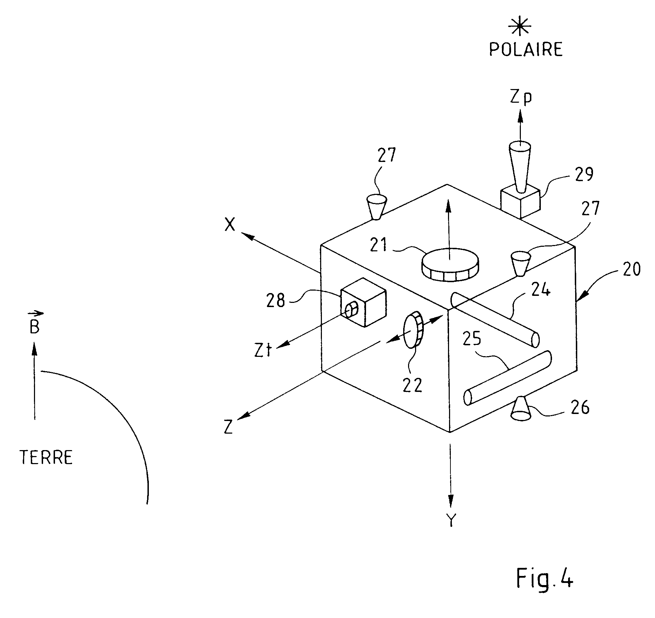

Les figures 4, 5 et 6 représentent les satellites 20, 30 et 40 représentatifs du cas d'un moment cinétique orientable.

Le satellite 20 de la figure 4 comporte ainsi une roue cinétique 21 en tangage et une roue de réaction 22 ici d'axe orienté selon l'axe de lacet.

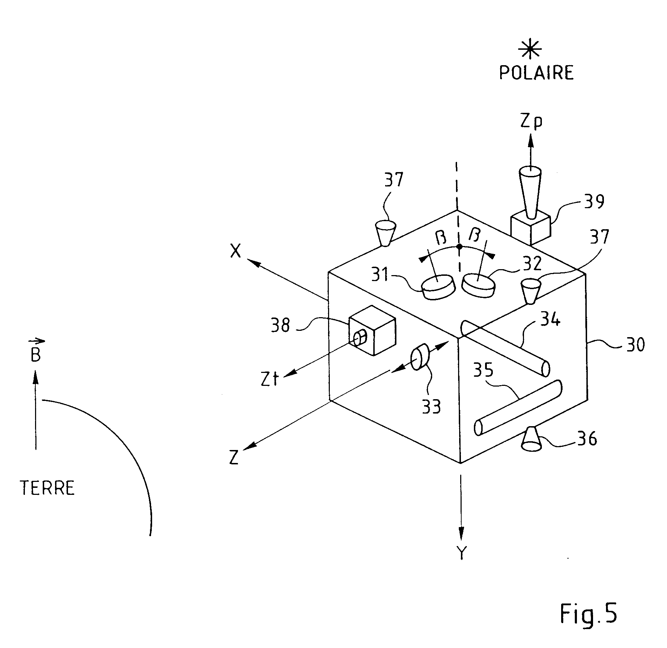

Le satellite 30 de la figure 5 est équipé de deux roues cinétiques 31 et 32 disposées symétriquement autour de l'axe de tangage Y et faisant un angle $\beta$ par rapport à cet axe et avantageusement d'une roue de réaction 33 d'axe compris dans le plan roulis-lacet, ici parallèle à l'axe de lacet Z et que l'on utilise en cas de panne de l'une ou l'autre des 2 roues cinétiques. En outre, les axes de rotation des 3 roues sont proches ou inclus d'un même plan méridien décalé d'un angle $\alpha$ par rapport au plan de tangage/lacet (ici nul pour faciliter la lisibilité du dessin).

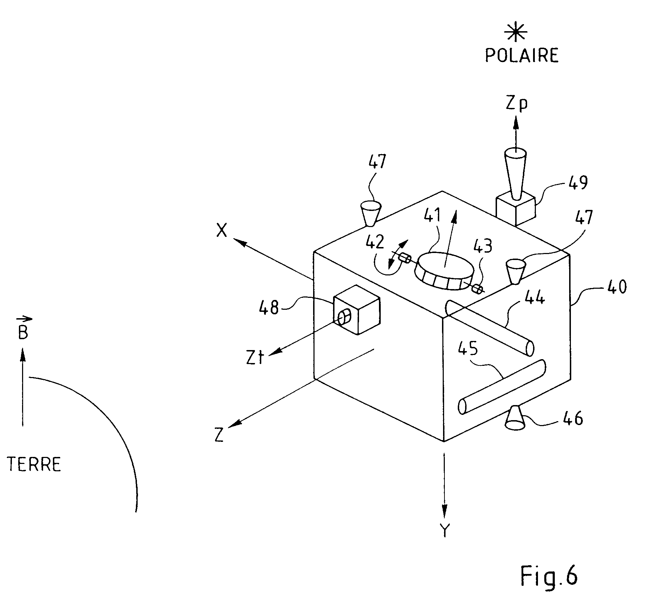

Le satellite 40 de la figure 6 comporte une seule roue cinétique 41 montée sur un pivot à un axe parallèle au plan roulis-lacet, ici proche de l'axe de roulis. La géométrie de la roue cinétique sur pivot est telle qu'elle génère un moment cinétique ayant une composante dominante en tangage et une composante variable en général moins importante dans le plan de roulis/lacet, de préférence proche de l'axe de lacet. A titre indicatif, le pivot peut être réalisé à l'aide d'un support doté d'un moteur électrique 42 et d'un capteur de position angulaire 43.

Les satellites 10, 20, 30 et 40 (à moment cinétique fixe ou orientable) sont également équipés de deux bobines magnétiques 14, 24, 34 ou 44 et 15, 25, 35 ou 45, du type à noyau ou non, et dont les axes sont orthogonaux entre eux et sont situés soit dans le plan de roulis/lacet du satellite (plan XZ) soit au voisinage de ce plan.

L'interaction des dipôles magnétiques M1 et M2 générés par ces deux bobines avec le champ magnétique terrestre $\vec{B}$ existant à l'endroit de l'orbite où se trouve le satellite permet de créer un couple de commande magnétique, défini d'après la loi de LAPLACE par le produit vectoriel du vecteur M résultante de M1 et M2 avec le vecteur B et, de ce fait, ce couple admet notamment des composantes suivant les axes de roulis et de lacet du satellite.

En outre, le satellite dispose d'autres actionneurs, comme par exemple au moins deux tuyères 16, 26, 36 ou 46 et 17, 27, 37 ou 47, capables de générer des couples autour des axes de roulis et/ou de lacet (et en particulier autour de la normale au plan des roues cinétiques en V dans le cas de la figure 5). Il s'agit par exemple de tuyères intervenant dans le contrôle d'orbite. Ces actionneurs sont commandés par une logique de secours qui intervient en cas de perturbation sévère du champ magnétique ou en, cas d'une panne liée aux bobines.

Enfin, la détection des erreurs de pointage du satellite en roulis et tangage est effectuée par un détecteur de Terre 18, 28, 38 ou 48 dont l'axe optique Zt est de préférence proche de l'axe de lacet Z du satellite alors que l'erreur de lacet est déterminée à partir d'un détecteur de l'étoile Polaire 19, 29, 39 ou 49 dont l'axe optique Zp est de préférence proche de l'axe de tangage Y mais de sens contraire et dont le champ de vue est suffisamment large - typiquement deux fois la valeur (inclinaison orbitale + 3 degrés) - et ayant une sensibilité adéquate pour permettre un suivi permanent de l'Etoile Polaire tout au long de l'orbite de satellite.

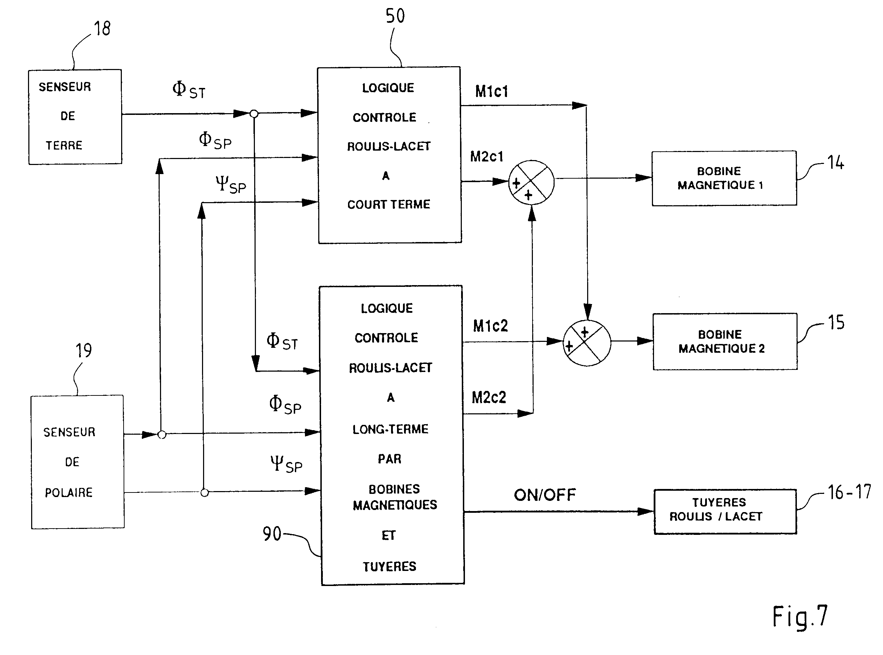

La figure 7 présente le diagramme fonctionnel du contrôle du roulis/lacet basé sur les détecteurs de Terre et de Polaire pour la détection des erreurs d'attitude et sur les bobines magnétiques et les tuyères dans le cas du satellite à moment cinétique fixe de la figure 3.

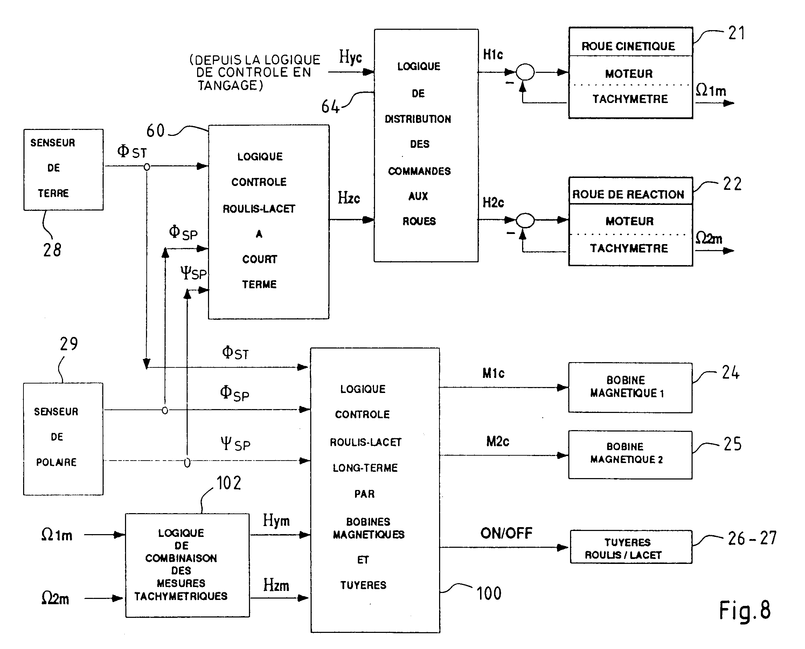

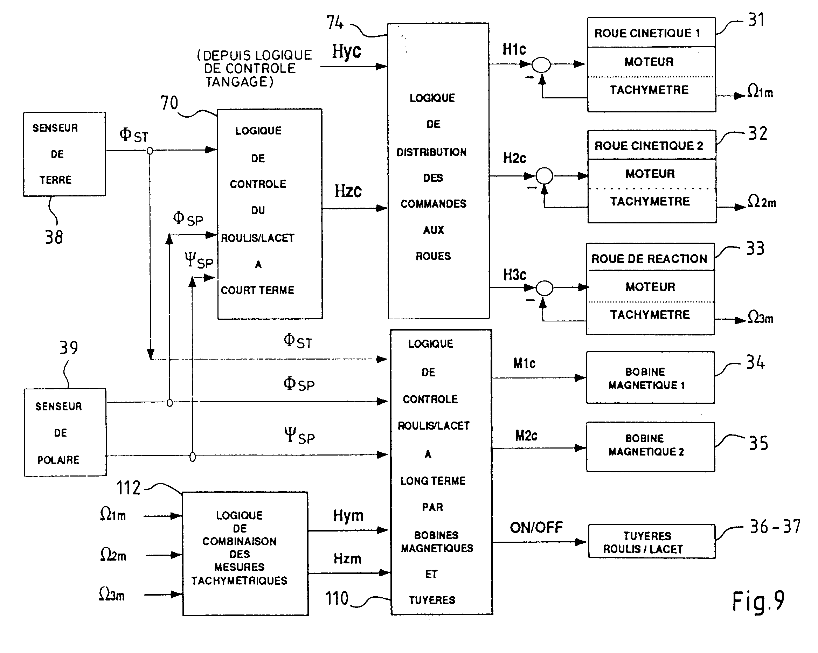

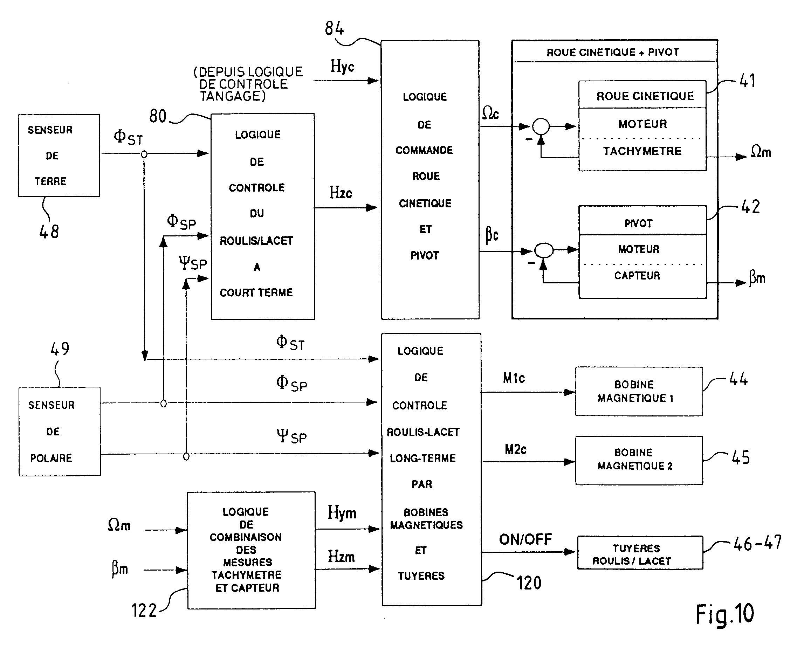

Les figures 8 à 10 présentent les diagrammes fonctionnels du contrôle du roulis/lacet basé sur les détecteurs de Terre et de Polaire et sur les roues, les bobines magnétiques et les tuyères dans le cas des satellites des figures 4 à 6.

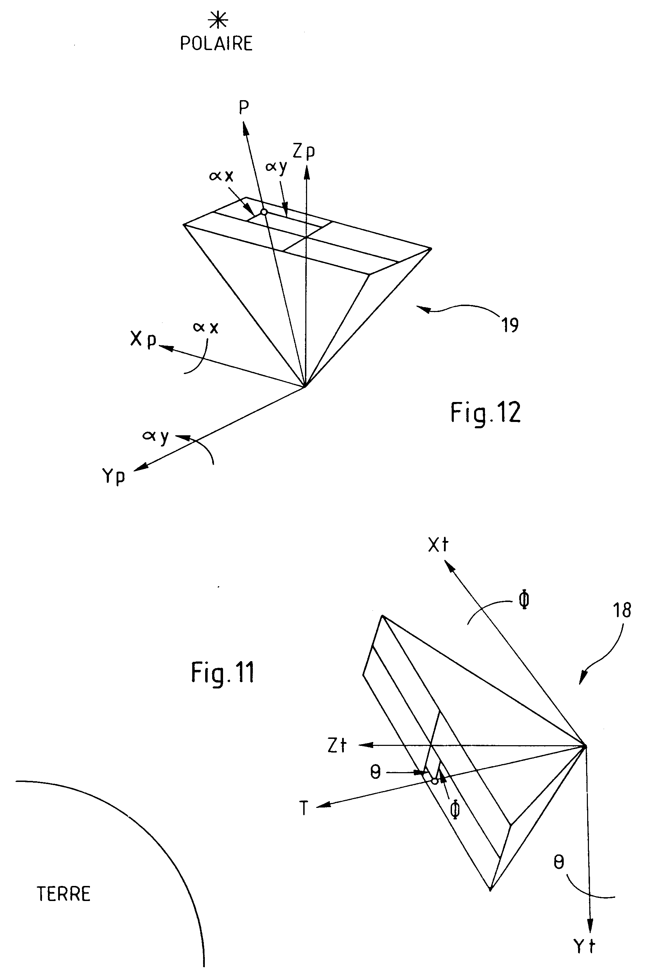

La figure 11 montre la géométrie de mesure directe des angles de roulis et de tangage par le détecteur terrestre.

La figure 12 présente le principe de mesure du vecteur direction Polaire dans le trièdre Xp Yp et Zp du détecteur stellaire. Dans le cas pratique où les axes Xp et Yp sont respectivement parallèles aux axes X et Z du satellite et où les angles d'attitude $\Phi$, $\Theta$ et $\Psi$ sont faibles (inférieurs à 1 degré), les erreurs d'attitude en roulis $\Phi$ et lacet $\Psi$ du satellite se déduisent des mesure $\alpha x$ et $\alpha y$ du détecteur par les formules approchées de la forme:

$$\Phi = \alpha x + Pzo/Pyo$$
$$\Psi = \alpha y - Pxo/Pyo$$

où Pxo, Pyo et Pzo sont les composantes du vecteur unitaire satellite-Etoile Polaire dans le trièdre orbital local (fonction de la position orbitale instantanée du satellite, et de la position de l'étoile dans l'espace inertiel).

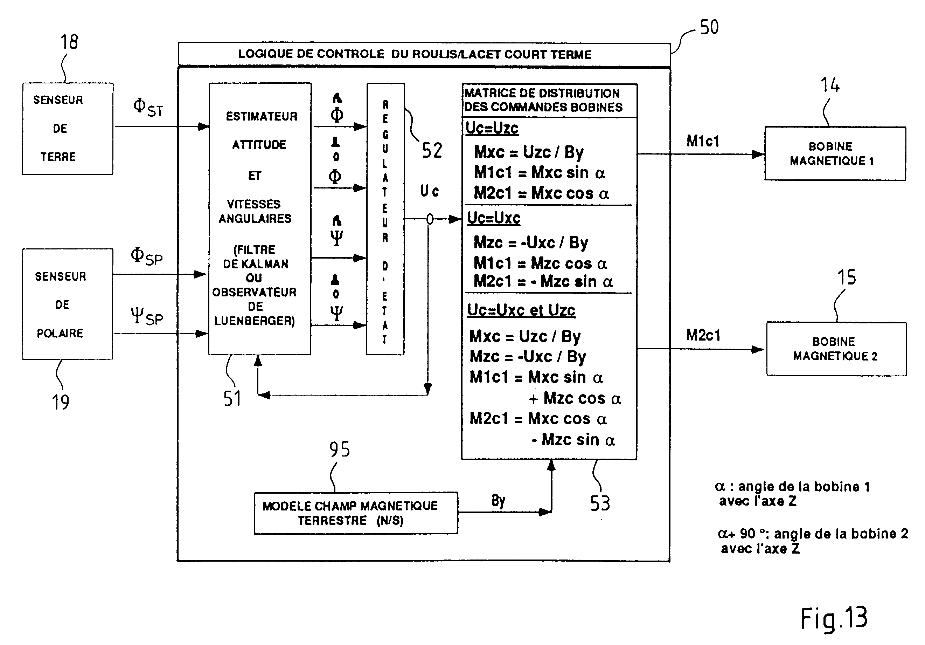

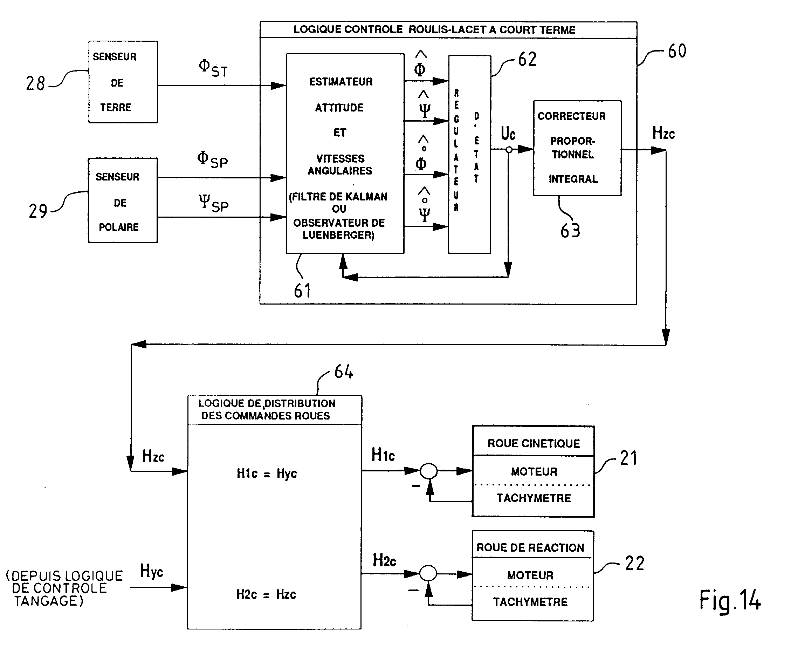

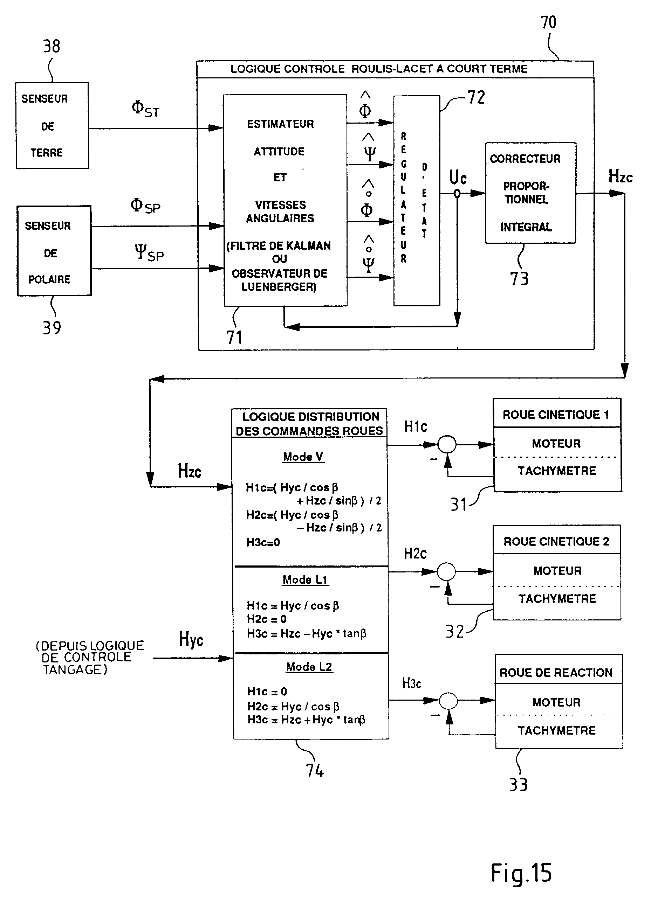

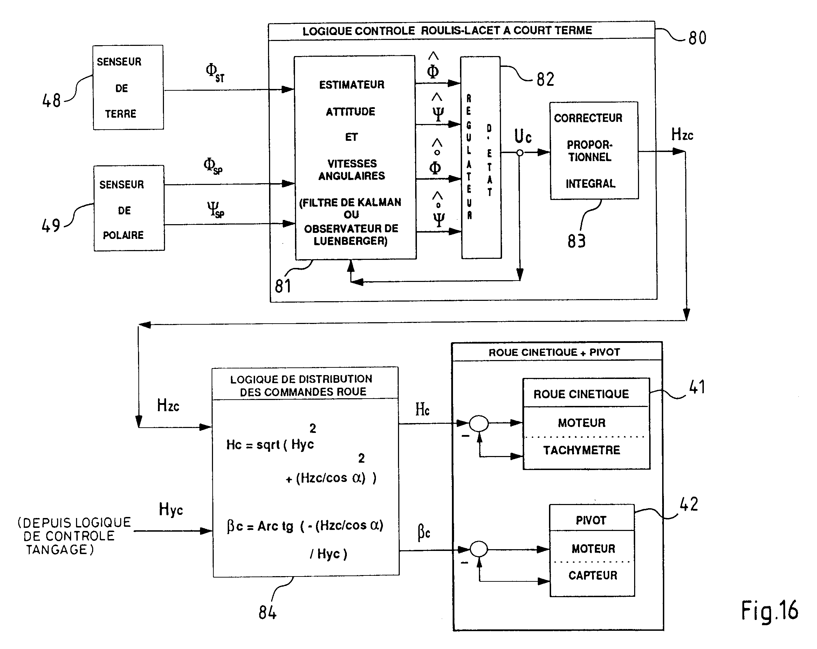

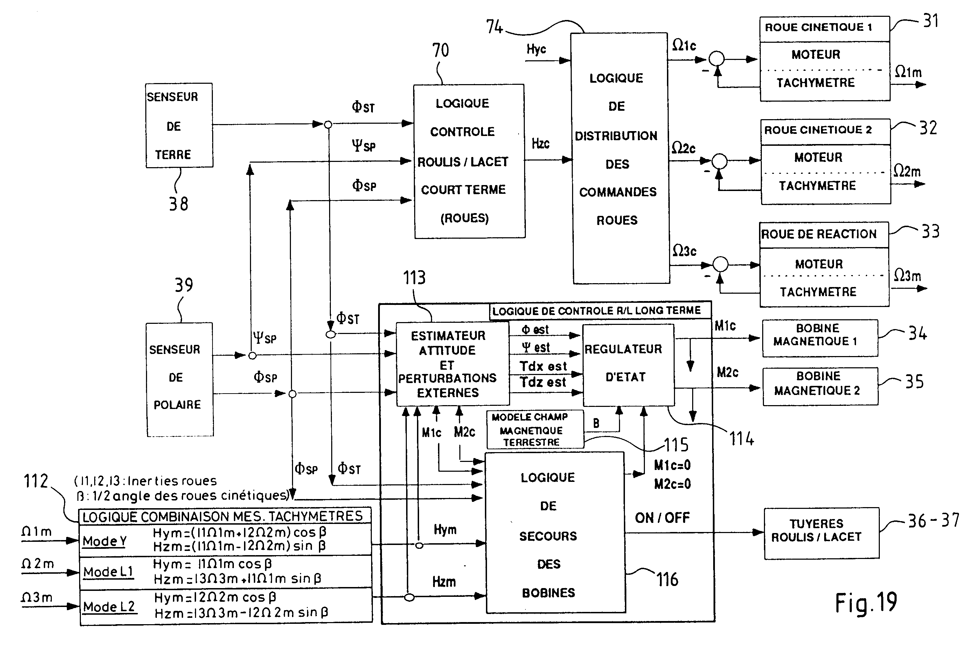

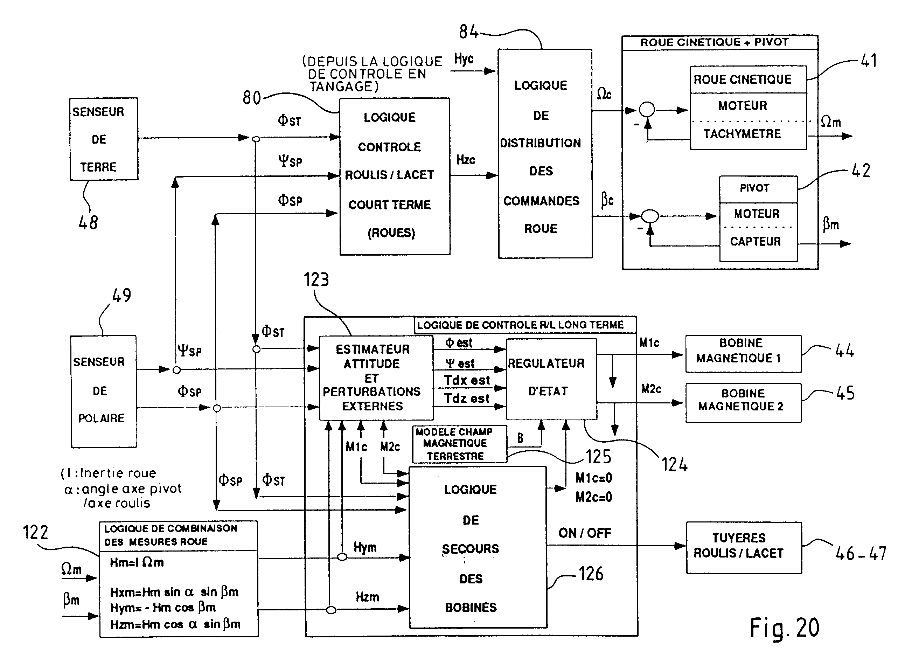

Les divers éléments intervenant dans le contrôle d'attitude selon l'invention sont interconnectés par deux boucles, respectivement appelées boucle de contrôle à court terme et boucle de contrôle à long terme, détaillées dans les figures 13 à 16, et 17 à 20 respectivement.

Le principal objectif de la boucle de contrôle à court terme est d'amortir la nutation de l'axe de tangage Y du satellite en réduisant à zéro les vitesses angulaires autour des axes de roulis X et de lacet Z et en ramenant les angles de roulis et de lacet à l'intérieur des plages spécifiées.

Cette boucle 50, 60, 70 ou 80 pour les satellites 10, 20, 30 ou 40 comporte une logique de contrôle du roulis/lacet à court terme à base d'estimateur d'état et de régulateur à gains constants ou variables.

Un filtre estimateur d'état 51, 61, 71 ou 81, par exemple du type non-minimal de LUENBERGER (voir "The synthesis of regulator logic using state-variable concepts" ; article paru dans : Proceedings of the IEEE, Vol. 58, n° 11, November 1970, pp. 1803-1811) ou filtre de KALMAN à gains asymptotiques (WERTZ Editor - "Spacecraft attitude determination and control", Reidel Publishing Company, the Netherlands, 1977), permet d'estimer en temps réel les angles de roulis et de lacet ainsi que les vitesses angulaires en roulis et lacet du satellite et ce à partir des mesures des détecteurs de Terre et de Polaire.

Ensuite, un régulateur 52, 62, 72 ou 82 (voir par exemple JACQUOT "Modern digital control systems", Marcel Decker, Inc. New York and Basel, 1981) par exemple à gains présélectionnés détermine le couple en lacet Uc qu'il faut commander soit aux bobines magnétiques dans le cas du satellite à moment cinétique fixe (cas 1), soit aux roues cinétiques et/ou de réaction dans le cas du moment cinétique orientable (cas 2).

Dans le cas du satellite à moment cinétique fixe (figure 13), le couple commandé est transformé en dipôles magnétiques de commande M1c1 et M1c2 pour les bobines et ce grâce à une matrice de distribution des commandes repérée 53, utilisant un modèle embarqué du champ magnétique terrestre, comme par exemple le modèle du dipôle incliné explicité dans "Spacecraft Attitude determination and control" (WERTZ Editor, Reidel Publishing Company, The Netherlands, 1977) et se basant sur la géométrie d'implantation des bobines dans le satellite.

Dans le cas du satellite à moment cinétique orientable, le couple commandé est converti à l'aide d'un correcteur 63, 73 ou 83, par exemple du type proportionnel-intégral (voir par exemple JACQUOT Raymond G. "Modern digital control systems" - Marcel Decker, Inc., New York and Basel, 1981) en moment cinétique de consigne Hzc soit pour la roue de réaction de la figure 4, soit pour les roues cinétiques de la figure 5, ou bien pour l'une d'elles et la roue de réaction, soit pour la seule roue à pivot de la figure 6.

Une logique de distribution 54, 64, 74 ou 84 applique les signaux aux actionneurs concernés.

La boucle de contrôle à long terme à pour objet de maintenir les angles de roulis Φ et de lacet Ψ à l'intérieur de leurs plages de spécification (par exemple, +/- 0.07 degré pour le roulis et +/- 0.07 degré pour le lacet) malgré l'action parasite des couples perturbateurs d'origine externe comme notamment le couple aérodynamique et le gradient de gravité à basse altitude, ou le couple de pression de radiation solaire à haute altitude.

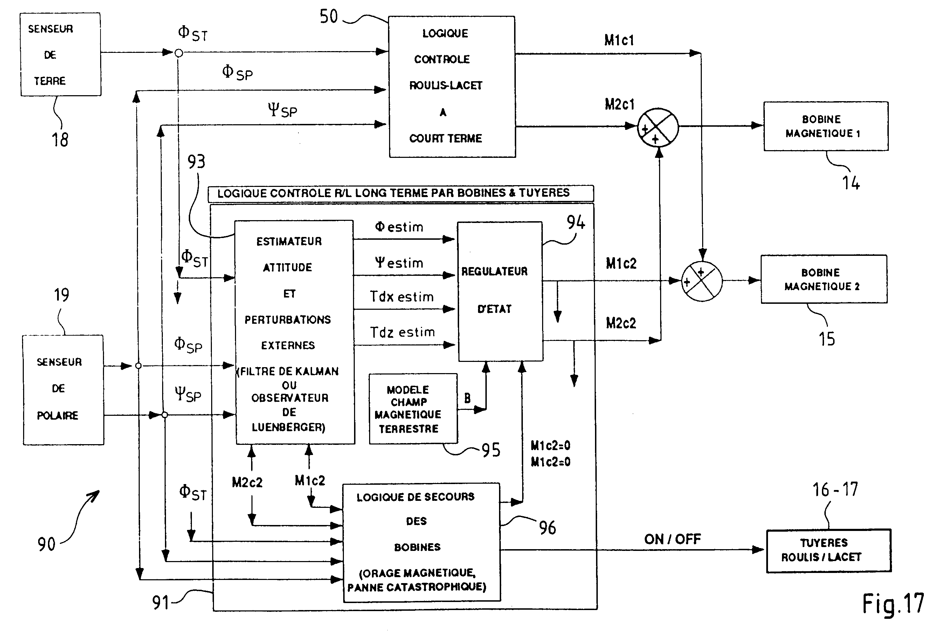

Pour atteindre cet objectif dans le cas du satellite à moment cinétique fixe (boucle 90 de la figure 17), les informations provenant des détecteurs de Terre et de Polaire sont traitées par une logique 91 de contrôle du roulis/lacet à long terme de manière à commander les dipôles magnétiques des bobines ou à activer les autres actionneurs tels que les tuyères.

Cette logique comprend un observateur d'état 93, par exemple un filtre de KALMAN à gains asymptotiques (voir ci-dessus) qui utilise les mesures des détecteurs pour estimer en temps réel les erreurs de roulis et de lacet du satellite ainsi que les composantes des perturbations externes et, en particulier, les premiers termes des développements en série de Fourier jusqu'au deuxième ordre.

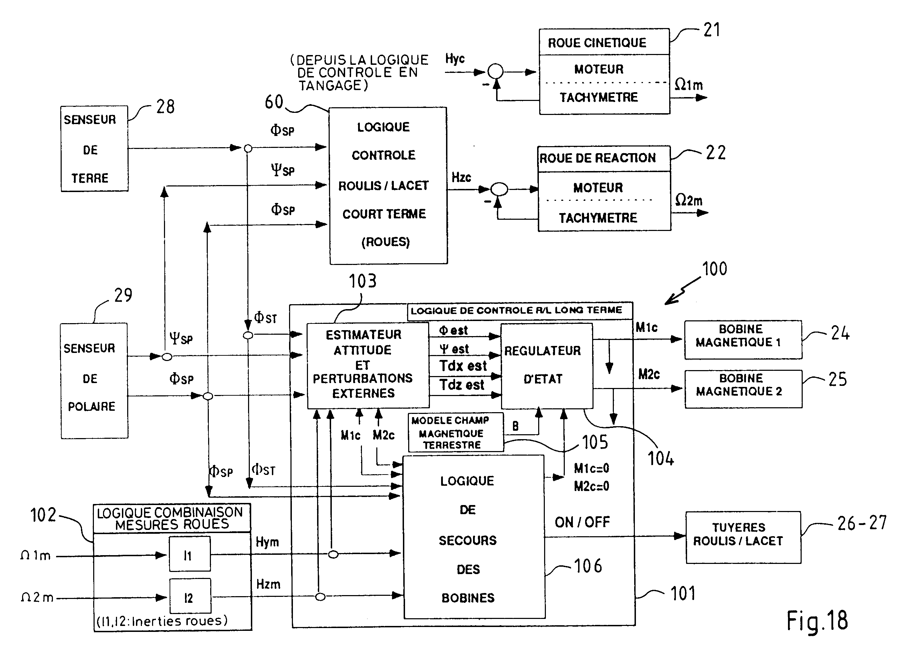

Dans le cas du satellite à moment cinétique orientable (boucle 100, 110 ou 120 des figures 18 à 20), les informations provenant non seulement des détecteurs de Terre et de Polaire, mais aussi celles fournies par les tachymètres dont sont munies les roues (voire le capteur de position de la roue à pivot), sont traitées par une logique 101, 111 ou 121 de contrôle du roulis/lacet à long terme de manière à commander les dipôles magnétiques des bobines de roulis et de lacet ou à activer les autres actionneurs tels que les tuyères.

En effet, dans le même cas, les tachymètres associés aux roues mesurent en permanence les vitesses de rotation de ces roues, alors que le tachymètre et le capteur de position de la roue à pivot détectent la vitesse angulaire et la position angulaires du pivot. Dans chaque cas les signaux de sorties sont traités par une logique de combinaison 102, 112 ou 122 utilisant des formules mathématiques simples basées sur la géométrie des roues afin de déterminer en particulier les composantes du moment cinétique global Hym et Hzm suivant les axes Y et Z respectivement.

Ensuite, un estimateur d'état 103, 113 ou 123 se base non seulement sur les mesures des détecteurs mais aussi sur les paramètres Hym et Hzm définis ci-dessus afin d'estimer en temps réel les erreurs de roulis et de lacet du satellite ainsi que les composantes des perturbations externes et en particulier les développements en séries de Fourier jusqu'au deuxième harmonique.

Enfin, que le satellite soit à moment cinétique fixe ou orientable, un régulateur 94, 104, 114 ou 124 (voir ci-dessus) calcule le couple de commande nécessaire au recalage d'attitude en fonction des paramètres estimés ci-dessus puis, à l'aide d'un modèle du champ magnétique terrestre 95, 105, 115 ou 125, le régulateur détermine les dipôles magnétiques qu'il faut commander aux deux bobines : M2c1 et M2c2 pour le satellite à moment cinétique fixe, ou bien M1c et M2c pour les satellites à moment cinétique orientable.

L'intéraction des dipôles générés par les bobines avec le champ magnétique terrestre produit alors des couples de commande autour des axes de roulis et de lacet dont l'effet est de maintenir à long terme les erreurs de roulis et de lacet du satellite à l'intérieur des spécifications de pointage malgré l'action des perturbations externes.

Par ailleurs, en cas de panne catastrophique liée aux bobines ou de perturbation sévère du champ magnétique amenant à commander les bobines en saturation et dans l'hypothèse où, par exemple, l'un et/ou l'autre des angles de roulis et de lacet se dégrade(nt) et menace(nt) de ne plus être conforme(s) aux spécifications, une logique de secours 96, 106, 116 ou 126, procède à la mise hors tension des bobines et commande les autres actionneurs disponibles tels que notamment les tuyères de manière à maintenir l'erreur de roulis et/ou l'erreur de lacet à l'intérieur de la/ou des plage(s) autorisée(s).

Il va de soi que la description qui précède n'a été proposée qu'à titre d'exemple non limitatif et que de nombreuses variantes peuvent être proposées par l'homme de l'art sans sortir du cadre de l'invention définie par les revendications.

**Revendications**

1.  Système de contrôle d'attitude en roulis/lacet d'un satellite stabilisé 3-axes sur une orbite équatoriale ou faiblement inclinée sur l'Equateur, comportant :
    -   un dispositif de détection de l'attitude du satellite en roulis, en lacet et en tangage, comportant un détecteur terrestre (18, 28, 38, 48) et un détecteur stellaire (19, 29, 39, 49) adapté à détecter l'Etoile Polaire ;
    -   un dispositif d'actionnement à plusieurs éléments comportant un ensemble à moment cinétique en permanence non nul et à composante dominante orientée selon l'axe de tangage (11 ; 21, 22 ; 31, 32 , 33 ; 41) et un ensemble générateur de dipôle magnétique disposé au moins approximativement parallèlement au plan roulis/lacet (14, 15 ; 24, 25 ; 34, 35 ; 44, 45), et un jeu d'actionneurs de secours (16, 17 ; 26, 27 ; 36, 37 ; 46, 47) ;
    -   un circuit de traitement connecté entre le dispositif de détection d'attitude et le dispositif d'actionnement et comportant :
        .   une boucle (50, 60, 70, 80) de contrôle en roulis/lacet à court terme comportant un estimateur d'état (51, 61, 71, 81) pour estimer, à partir des mesures du dispositif de détection les valeurs angulaires et les vitesses angulaires d'attitude en roulis et en lacet, et un régulateur à gains présélectionnés (52, 62, 72, 82) pour déterminer, à partir des valeurs et vitesses angulaires estimées, des signaux de consigne destinés, au travers d'une logique de distribution (53, 64, 74, 84), à certains au moins des éléments du dispositif d'actionnement,
        .   une boucle (90, 100, 110, 120) de contrôle en roulis/lacet à long terme comportant un estimateur d'état (93, 103, 113, 123) pour estimer, à partir des mesures du dispositif de détection, les valeurs angulaires d'attitude en roulis et en lacet, et les composantes selon les axes de roulis et de lacet des couples de perturbation externes et un régulateur (94, 104, 114, 124) pour déterminer, au travers d'une logique de distribution, un signal de dipôle à appliquer à l'ensemble générateur de dipôle magnétique, ainsi que, en parallèle sur le régulateur, une chaîne de secours (96, 106, 116, 126) adaptée à envoyer des signaux de commande au jeu d'actionneurs de secours.

2.  Système selon la revendication 1, caractérisé en ce que l'ensemble à moment cinétique du dispositif d'actionnement est à moment cinétique fixe.

3.  Système selon la revendication 2, caractérisé en ce que l'ensemble à moment cinétique fixe est formé d'une roue cinétique (11) d'axe au moins approximativement parallèle à l'axe de tangage.

4.  Système selon la revendication 2 ou la revendication 3, caractérisé en ce que les signaux de consigne délivrés par le régulateur (52) de la boucle de contrôle à court terme (50) sont appliqués aux bobines magnétiques (14, 15) et le dipôle déterminé par le régulateur de la boucle de contrôle à long terme est ajouté à ces signaux de consigne.

5. Système selon la revendication 1, caractérisé en ce que l'ensemble à moment cinétique du dispositif d'actionnement est à moment cinétique orientable à un degré de liberté autour d'un axe au moins approximativement parallèle à l'axe de roulis.

6. Système selon la revendication 5, caractérisé en ce que cet ensemble à moment cinétique comporte une roue cinétique (21) d'axe au moins proche de l'axe de tangage et une roue de réaction (22) d'axe au moins proche de l'axe de lacet.

7. Système selon la revendication 5, caractérisé en ce que cet ensemble à moment cinétique comporte deux roues cinétiques (31, 32) disposées autour de l'axe de tangage et une roue de réaction (33) d'axe proche de l'intersection du plan des axes des roues cinétiques avec le plan roulis/lacet.

8. Système selon la revendication 5, caractérisé en ce que cet ensemble à moment cinétique comporte une roue cinétique (41) montée sur un pivot à un axe et capable de générer un moment cinétique ayant une composante dominante en tangage et une composante variable en roulis/lacet.

9. Système selon la revendication 8, caractérisé en ce que cette roue cinétique sur pivot est commandée en inclinaison par un actionneur et est munie d'un capteur de position angulaire (43) associé au pivot et délivrant un signal destiné à la boucle de contrôle à long terme.

10. Système selon l'une quelconque des revendications 5 à 9, caractérisé en ce que l'ensemble à moment cinétique orientable comporte des tachymètres fournissant des signaux de vitesse destinés à la boucle de contrôle à long terme.

11. Système selon l'une quelconque des revendications 1 à 10, caractérisé en ce que l'ensemble générateur de dipôle magnétique comporte deux bobines magnétiques d'axes au moins approximativement parallèles au plan roulis/lacet.

12. Système selon la revendication 11, caractérisé en ce que les axes des bobines magnétiques sont orthogonaux.

13. Système selon la revendication 12, caractérisé en ce que les bobines magnétiques sont respectivement orientées parallèlement aux axes de roulis et de lacet.

14. Système selon l'une quelconque des revendications 1 à 13, caractérisé en ce que l'estimateur d'état de la boucle de contrôle à court terme est un observateur non-minimal de LUENBERGER.

15. Système selon l'une quelconque des revendications 1 à 13, caractérisé en ce que l'estimateur d'état de la boucle de contrôle à court terme est un filtre de KALMAN à gains asymptotiques.

16. Système selon l'une quelconque des revendications 1 à 15, caractérisé en ce que l'estimateur d'état de la boucle de contrôle à long terme est un filtre de KALMAN.

17. Système selon l'une quelconque des revendications 1 à 16, caractérisé en ce que le jeu d'actionneurs de secours comporte des tuyères de contrôle d'attitude en roulis/lacet (16, 17 ; 26, 27 ; 36, 37 ; 46, 47).

**Claims**

1. Roll/yaw attitude control system for a three-axis stabilised satellite in Equatorial or near-Equatorial orbit, comprising:
   - a device for sensing the attitude of the satellite in roll, in yaw and in pitch comprising a terrestrial sensor (18, 28, 38, 48) and a stellar sensor (19, 29, 39, 49) adapted to detect the Pole Star;
   - a multi-element actuator device comprising a system with a kinetic moment having a non-null value at all times and a dominant component along the pitch axis (11; 21, 22; 31, 32, 33; 41) and a magnetic dipole generator system disposed at least approximately parallel to the roll/yaw plane (14, 15; 24, 25; 34, 35; 44, 45) and a set of backup actuators (16, 17; 26, 27; 36, 37; 46, 47);
   - a processor circuit connected between the attitude sensing device and the actuator device and comprising:
     . a short-term roll/yaw control loop (50, 60, 70, 80) comprising a state estimator (51, 61, 71, 81) for estimating on the basis of measurements from the sensing device the roll and yaw attitude angles and angular speeds and a preselected gain controller (52, 62, 72, 82) for determining from estimated angle and angular speed values set point signals fed by distribution logic (53, 64, 74, 84) to some at least of the elements of the actuator device,

. a long-term roll/yaw control loop (90, 100, 110, 120) comprising a state estimator (93, 103, 113, 123) for estimating on the basis of measurements from the sensing device roll and yaw angles and components along the roll and yaw axes of exterior disturbing torques and a controller (94, 104, 114, 124) for determining via distribution logic a dipole signal to be applied to the magnetic dipole generator system and, in parallel with the controller, a backup system (96, 106, 116, 126) adapted to send control signals to the set of backup actuators.

2. System according to claim 1 characterised in that the kinetic moment system of the actuator device has a fixed kinetic moment.

3. System according to claim 2 characterised in that the fixed kinetic moment system comprises a momentum wheel (11) with its axis at least approximately parallel to the pitch axis.

4. System according to claim 2 or claim 3 characterised in that the set point signals supplied by the controller (52) of the short-term control loop (50) are applied to the magnetic coil (14, 15) and the dipole determined by the controller of the long-term control loop is added to said set point signals.

5. System according to claim 1 characterised in that the kinetic moment system of the actuator device has an orientable kinetic moment with one degree of freedom about an axis at least approximately parallel to the roll axis.

6. System according to claim 5 characterised in that said kinetic moment system comprises a momentum wheel (21) having its axis at least near the pitch axis and a reaction wheel (22) having its axis at least near the yaw axis.

7. System according to claim 5 characterised in that said kinetic moment system comprises two momentum wheels (31, 32) disposed about the pitch axis and a reaction wheel (33) having an axis near the intersection of the plane of the axes of the momentum wheels with the roll/yaw plane.

8. System according to claim 5 characterised in that said kinetic moment system comprises a momentum wheel (41) mounted on a single-axis pivot and capable of generating a kinetic moment having a dominant component in pitch and a variable component in roll/yaw.

9. System according to claim 8 characterised in that the inclination of said pivoted momentum wheel is controlled by an actuator and said pivoted momentum wheel has an angular position sensor (43) associated with the pivot and supplying a signal to the long-term control loop.

10. System according to any one of claims 5 through 9 characterised in that the orientable kinetic moment system comprises tachometers supplying speed signals to the long-term control loop.

11. System according to any one of claims 1 through 10 characterised in that the magnetic dipole generator system comprises two magnetic coils with axes at least approximately parallel to the roll/yaw plane.

12. System according to claim 11 characterised in that the axes of the magnetic coils are orthogonal.

13. System according to claim 12 characterised in that the magnetic coils are respectively oriented parallel to the roll and yaw axes.

14. System according to any one of claims 1 through 13 characterised in that the short-term control loop state estimator is a LUENBERGER non-minimal observer.

15. System according to any one of claims 1 through 13 characterised in that the short-term control loop state estimator is an asymptotic gain KALMAN filter.

16. System according to any one of claims 1 through 15 characterised in that the long-term control loop state estimator is a KALMAN filter.

17. System according to any one of claims 1 through 16 characterised in that the set of backup actuators comprises roll/yaw attitude control thrusters (16, 17; 26, 27; 36, 37; 46, 47).

**Patentansprüche**

1. System zur Steuerung der Roll-/Gierlage eines Satelliten, der auf einer äquatorialen Umlaufbahn oder einer Umlaufbahn mit gegenüber dem Äquator kleiner Bahnneigung dreiachsenstabilisiert ist, umfassend
   - eine Detektionsvorrichtung für die Satellitenroll-, -gier- und -nicklage, die einen terrestrischen Detektor (18, 28, 38, 48) und einen stellaren Detektor (19, 29, 39, 49) zur Detektion des Polarsterns umfaßt,
   - eine Betätigungsvorrichtung mit mehreren Elementen, die eine Einrichtung mit einem ständig von Null verschiedenen Drehimpuls und mit einer entsprechend der Nickachse ausgerichteten Hauptkomponente (11; 21, 22; 31, 32, 33; 41), eine Einrichtung zur Erzeugung eines magnetischen Dipols, der wenigstens annähernd parallel zur Roll-/Gierebene angeordnet ist (14, 15; 24, 25; 34, 35; 44, 45), und eine Gruppe von Hilfsbetätigungsgeräten (16, 17; 26, 27; 36, 37; 46, 47) aufweist, und
   - einen zwischen die Vorrichtung zur Lagedetektion und die Betätigungsvorrichtung geschalteten Verarbeitungskreis, mit einer Schleife (50, 60, 70, 80) zur kurzfristigen Roll-/Giersteuerung, die einen von Messungen der Detektionsvorrichtung ausgehenden Zustandsbewerter (51, 61, 71, 81) zur Abschätzung der Winkelwerte und -geschwindigkeiten der Roll- und Gierlage und eine Regeleinrichtung mit vorher ausgewähltem Verstärkungsfaktor (52, 62, 72, 82) umfaßt, die, ausgehend von geschätzten Winkelwerten und -geschwindigkeiten, Einstellsignale festlegt, die über eine Verteilerlogik (53, 64, 74, 84) für mindestens bestimmte Elemente der Betätigungsvorrichtung vorgesehen sind, und einer Schleife (90, 100, 110, 120) zur langfristigen Roll-/Giersteuerung, die einen von Messungen der Detektionsvorrichtung ausgehenden Zustandsbewerter (93, 103, 113, 123) zur Abschätzung der Winkelwerte der Roll- und Gierlage und der Komponenten äußerer Stördrehmomente in Richtung der Roll- und Gierachsen sowie eine Regeleinrichtung (94, 104, 114, 124), die über eine Verteilerlogik ein Dipolsignal zur Verwendung in der Einrichtung zur Erzeugung eines magnetischen Dipols festlegt, und, parallel zur Regeleinrichtung, eine Hilfskette (96, 106, 116, 126) umfaßt, die dazu dient, Steuersignale an die Gruppe von Hilfsbetätigungsgeräten zu schicken.

2. System nach Anspruch 1, dadurch gekennzeichnet, daß die Einrichtung mit Drehimpuls der Betätigungsvorrichtung einen festen Drehimpuls hat.

3. System nach Anspruch 2, dadurch gekennzeichnet, daß die Einrichtung mit festem Drehimpuls durch ein Schwungrad (11), dessen Achse wenigstens annähernd parallel zur Nickachse verläuft, gebildet wird.

4. System nach Anspruch 2 oder 3, dadurch gekennzeichnet, daß die von der Regeleinrichtung (52) der Schleife zur kurzfristigen Steuerung (50) gelieferten Signale auf Magnetspulen (14, 15) gegeben werden und der durch die Regeleinrichtung der Schleife zur langfristigen Steuerung bestimmte Dipol diesen Einstellsignalen überlagert wird.

5. System nach Anspruch 1, dadurch gekennzeichnet, daß die Einrichtung mit Drehimpuls der Betätigungsvorrichtung einen Drehimpuls hat, der hinsichtlich eines Freiheitsgrades um eine zumindest annähernd zur Rollachse parallele Achse ausrichtbar ist.

6. System nach Anspruch 5, dadurch gekennzeichnet, daß diese Einrichtung mit Drehimpuls ein Schwungrad (21) mit einer zumindest nahe der Nickachse gelegenen Achse und ein Reaktionsrad (22) mit einer zumindest nahe der Gierachse gelegenen Achse aufweist.

7. System nach Anspruch 5, dadurch gekennzeichnet, daß diese Einrichtung mit Drehimpuls zwei um die Nickachse herum angeordnete Schwungräder (31, 32) und ein Reaktionsrad (33) aufweist, dessen Achse nahe dem Schnitt der Ebene der Achsen der Schwungräder mit der Roll-/Gierebene liegt.

8. System nach Anspruch 5, dadurch gekennzeichnet, daß die Einrichtung mit Drehimpuls ein Schwungrad (41) aufweist, das auf einem einachsigen Drehzapfen befestigt und dazu geeignet ist, einen Drehimpuls mit einer Hauptnickkomponente und einer veränderbaren Roll-/Gierkomponente zu erzeugen.

9. System nach Anspruch 8, dadurch gekennzeichnet, daß dieses Schwungrad auf dem Drehzapfen hinsichtlich seiner Neigung durch ein Betätigungsgerät gesteuert wird und mit einem mit dem Drehzapfen verbundenen Winkelpositionsaufnehmer (43) ausgerüstet ist, der ein für die Schleife zur langfristigen Steuerung bestimmtes Signal aussendet.

10. System nach einem der Ansprüche 5 bis 9, dadurch gekennzeichnet, daß die Einrichtung mit ausrichtbarem Drehimpuls Drehzahlmesser umfaßt, die für die Schleife zur langfristigen Steuerung bestimmte Geschwindigkeitssignale liefern.

11. System nach einem der Ansprüche 1 bis 10, dadurch gekennzeichnet, daß die Einrichtung zur Erzeugung eines magnetischen Dipols zwei Magnetspulen aufweist, deren Achsen wenigstens annähernd parallel zur Roll-/Gierebene verlaufen.

12. System nach Anspruch 11, dadurch gekennzeichnet, daß die Achsen der Magnetspulen rechtwinklig aufeinander stehen.

13. System nach Anspruch 12, dadurch gekennzeichnet, daß die Magnetspulen jeweils parallel zur Roll- und Gierachse ausgerichtet sind.

14. System nach einem der Ansprüche 1 bis 13, dadurch gekennzeichnet, daß der Zustandsbewerter der Schleife zur kurzfristigen Steuerung ein nicht-minimales Beobachtungsgerät nach LUENBERGER ist.

15. System nach einem der Ansprüche 1 bis 13, dadurch gekennzeichnet, daß der Zustandsbewerter der Schleife zur kurzfristigen Steuerung ein KALMAN-Filter mit asymptotischen Verstärkungen ist.

16. System nach einem der Ansprüche 1 bis 15, dadurch gekennzeichnet, daß der Zustandsbewerter der Schleife zur langfristigen Steuerung ein KALMAN-Filter ist.

17. System nach einem der Ansprüche 1 bis 16, dadurch gekennzeichnet, daß die Gruppe von Hilfsbetätigungsgeräten Düsen zur Steuerung der Roll-/Gierlage (16, 17; 26, 27; 36, 37; 46, 47) umfaßt.

Fig.1

Fig.2

Fig. 3

POLAIRE

Zp

27

29

X

21

27

28

24

20

Zt

25

Z

22

26

$\vec{B}$

Y

TERRE

Fig.4

Fig.5

17

POLAIRE

Fig.6

Fig.7

EP 0 493 227 B1

Fig.8

Fig.9

Fig.10

EP 0 493 227 B1

POLAIRE

P

Zp

αx    αy

αx

Xp

αy

Yp

19

Fig.12

Xt

φ

18

Fig.11

Zt

θ

T

φ

θ

Yt

TERRE

23

**LOGIQUE DE CONTROLE DU ROULIS/LACET COURT TERME** ~50

18 — SENSEUR DE TERRE

$\Phi_{ST}$

ESTIMATEUR ATTITUDE ET VITESSES ANGULAIRES (FILTRE DE KALMAN OU OBSERVATEUR DE LUENBERGER) — 51

$\hat{\Phi}$ $\stackrel{\perp}{0}\Phi$ $\hat{\dot{\Phi}}$ $\hat{\Psi}$ $\stackrel{\perp}{0}\dot{\Psi}$

REGULATEUR D'ETAT — 52

19 — SENSEUR DE POLAIRE

$\Phi_{SP}$

$\Psi_{SP}$

Uc

**MATRICE DE DISTRIBUTION DES COMMANDES BOBINES**

__Uc=Uzc__

Mxc = Uzc / By
M1c1 = Mxc sin $\alpha$
M2c1 = Mxc cos $\alpha$

__Uc=Uxc__

Mzc = -Uxc / By
M1c1 = Mzc cos $\alpha$
M2c1 = - Mzc sin $\alpha$

__Uc=Uxc et Uzc__

Mxc = Uzc / By
Mzc = -Uxc / By
M1c1 = Mxc sin $\alpha$
$\quad$ + Mzc cos $\alpha$
M2c1 = Mxc cos $\alpha$
$\quad$ - Mzc sin $\alpha$

— 53

M1c1 → 14 — BOBINE MAGNETIQUE 1

M2c1 → 15 — BOBINE MAGNETIQUE 2

95 — MODELE CHAMP MAGNETIQUE TERRESTRE (N/S)

By

$\alpha$ : angle de la bobine 1 avec l'axe Z

$\alpha$+ 90 °: angle de la bobine 2 avec l'axe Z

Fig.13

EP 0 493 227 B1

EP 0 493 227 B1

**LOGIQUE CONTROLE ROULIS-LACET A COURT TERME**

28 — SENSEUR DE TERRE $\Phi_{ST}$

29 — SENSEUR DE POLAIRE $\Phi_{SP}$ $\Psi_{SP}$

ESTIMATEUR ATTITUDE ET VITESSES ANGULAIRES (FILTRE DE KALMAN OU OBSERVATEUR DE LUENBERGER)

61

$\hat{\Phi}$
$\hat{\Psi}$
$\hat{\dot{\Phi}}$
$\hat{\dot{\Psi}}$

REGULATEUR D'ETAT

62

$U_c$

CORRECTEUR PROPORTIONNEL INTEGRAL

63

60

$H_{zc}$

64

LOGIQUE DE DISTRIBUTION DES COMMANDES ROUES

$H_{zc}$

$H1c = Hyc$

$H2c = Hzc$

(DEPUIS LOGIQUE DE CONTROLE TANGAGE) $Hyc$

$H1c$

$H2c$

ROUE CINETIQUE MOTEUR TACHYMETRE — 21

ROUE DE REACTION MOTEUR TACHYMETRE — 22

Fig.14

Fig.15

EP 0 493 227 B1

Fig.16

LOGIQUE CONTROLE ROULIS-LACET A COURT TERME

80

CORRECTEUR
PROPOR-
TIONNEL
INTEGRAL

83

Hzc

82

REGULATEUR D'ETAT

Uc

$\hat{\Phi}$  $\hat{\Psi}$  $\hat{\dot{\Phi}}$  $\hat{\dot{\Psi}}$

ESTIMATEUR
ATTITUDE
ET
VITESSES
ANGULAIRES
(FILTRE DE KALMAN
OU
OBSERVATEUR DE
LUENBERGER)

81

$\Phi_{ST}$

$\Phi_{SP}$   $\Psi_{SP}$

SENSEUR
DE
TERRE

48

SENSEUR
DE
POLAIRE

49

ROUE CINETIQUE + PIVOT

41

ROUE CINETIQUE
MOTEUR
TACHYMETRE

42

PIVOT
MOTEUR
CAPTEUR

Hc

$\beta$c

LOGIQUE DE DISTRIBUTION
DES COMMANDES ROUE

Hc = sqrt ( Hyc $^2$ + (Hzc/cos $\alpha$) $^2$ )

$\beta$c = Arc tg ( - (Hzc/cos $\alpha$) / Hyc )

84

Hzc

Hyc

(DEPUIS LOGIQUE
DE CONTROLE
TANGAGE)

27

Fig.17

Fig.18

EP 0 493 227 B1

**SENSEUR DE TERRE** — 38

**SENSEUR DE POLAIRE** — 39

74

70 — **LOGIQUE CONTROLE ROULIS / LACET COURT TERME (ROUES)**

$\Phi_{ST}$
$\Psi_{SP}$
$\Phi_{SP}$

Hyc
Hzc

**LOGIQUE DE DISTRIBUTION DES COMMANDES ROUES**

$\Omega 1c$
$\Omega 2c$
$\Omega 3c$

**ROUE CINETIQUE 1** — 31
MOTEUR
TACHYMETRE
$\Omega 1m$

**ROUE CINETIQUE 2** — 32
MOTEUR
TACHYMETRE
$\Omega 2m$

**ROUE DE REACTION** — 33
MOTEUR
TACHYMETRE
$\Omega 3m$

**BOBINE MAGNETIQUE 1** — 34

**BOBINE MAGNETIQUE 2** — 35

**TUYERES ROULIS / LACET** — 36-37

113
**LOGIQUE DE CONTROLE R/L LONG TERME**

**ESTIMATEUR ATTITUDE ET PERTURBATIONS EXTERNES**

$\Phi$ est
$\Psi$ est
Tdx est
Tdz est

**REGULATEUR D'ETAT**

M1c
M2c

$\Phi_{ST}$
$\Psi_{SP}$
$\Phi_{SP}$

M1c M2c

**MODELE CHAMP MAGNETIQUE TERRESTRE**

B

115
114

M1c=0
M2c=0

ON / OFF

**LOGIQUE DE SECOURS DES BOBINES**

116

112 — (I1,I2,I3 : Inerties roues
β : 1/2 angle des roues cinétiques)

$\Phi_{SP}$ $\Phi_{ST}$

**LOGIQUE COMBINAISON MES. TACHYMETRES**

$\Omega 1m$ — Mode Y
$Hym = (I1\Omega 1m + I2\Omega 2m)\cos\beta$
$Hzm = (I1\Omega 1m - I2\Omega 2m)\sin\beta$

$\Omega 2m$ — Mode L1
$Hym = I1\Omega 1m \cos\beta$
$Hzm = I3\Omega 3m + I1\Omega 1m \sin\beta$

$\Omega 3m$ — Mode L2
$Hym = I2\Omega 2m \cos\beta$
$Hzm = I3\Omega 3m - I2\Omega 2m \sin\beta$

Hym
Hzm

30

Fig.19

EP 0 493 227 B1

Fig. 20